# FASCICULE DE BREVET EUROPEEN

(11) **EP 4 401 954 B1**
(45) Date de publication et mention de la délivrance du brevet: **09.04.2025**
(21) Numéro de dépôt: 22786058.2
(22) Date de dépôt: 06.09.2022
(51) Int. Cl.: B29C 70/46, B29C 70/48, B29C 33/30, F01D 25/00, F01D 25/24, B29L 31/00

(54) **CALE DE COMPACTAGE D'UN MOULE DE CARTER DE SOUFFLANTE**
KOMPAKTIERUNGSBLOCK FÜR EINE LÜFTERGEHÄUSEFORM
COMPACTING BLOCK FOR A FAN CASING MOULD

(30) Priorité: 16.09.2021 FR 2109711
(43) Date de publication de la demande: 24.07.2024
(73) Titulaire: SAFRAN AIRCRAFT ENGINES, 75015 Paris (FR)
(72) Inventeur: FABRE, Hubert Jean Marie, 77550 MOISSY-CRAMAYEL (FR); JAUSSAUD, Raoul, 77550 MOISSY-CRAMAYEL (FR)
(74) Mandataire: Cabinet Beau de Loménie
(86) Numéro de dépôt international: PCT/FR2022/051677
(87) Numéro de publication internationale: WO 2023/041861

(56) Documents cités:
- WO-A1-2011/161380
- WO-A1-2013/050692
- CA-A1- 2 902 849
- FR-A1- 2 958 875

## Description

### Domaine Technique

La présente invention se rapporte au domaine général de la fabrication des carters de turbine à gaz, et plus particulièrement des carters de rétention pour soufflante de turbine à gaz pour moteur aéronautique.

### Technique antérieure

Dans un moteur aéronautique à turbine à gaz, un carter de soufflante remplit plusieurs fonctions. Il définit la veine d'entrée d'air dans le moteur, supporte un matériau abradable en regard du sommet des aubes de la soufflante, supporte une structure éventuelle d'absorption d'ondes sonores pour le traitement acoustique en entrée du moteur et incorpore ou supporte un bouclier de rétention. Ce dernier constitue un piège retenant les débris, tels que les objets ingérés ou des fragments d'aubes endommagées, projetés par la centrifugation, afin d'éviter qu'ils traversent le carter et atteignent d'autres parties de l'aéronef.

La réalisation d'un carter de soufflante en matériau composite a déjà été proposée. On pourra, par exemple se référer au brevet EP 1 961 923 qui décrit la fabrication d'un carter en matériau composite à épaisseur évolutive comprenant la formation d'une préforme fibreuse par des couches superposées d'une texture fibreuse et la densification du renfort fibreux par une matrice. Plus précisément, ce document prévoit d'utiliser un mandrin d'appel pour le tissage tridimensionnel de la texture fibreuse, celle-ci étant ensuite enroulée en couches superposées sur un mandrin d'imprégnation présentant une surface extérieure dont le profil correspond à celui de la partie centrale du carter à fabriquer et deux flasques latéraux correspondant à des brides de fixation du carter. La préforme fibreuse est maintenue sur le mandrin d'imprégnation et une imprégnation par résine est réalisée avant polymérisation.

Pour réaliser l'imprégnation de la préforme fibreuse par un procédé d'injection de type RTM (« Resin Transfer Molding »), il est connu de venir positionner les éléments d'un contre-moule sur le mandrin d'imprégnation et former ainsi un moule d'injection. On pourra, par exemple, se référer à la demande WO 2013/060978 ou WO 2011/161380 A1 qui divulguent la mise en place de secteurs angulaires pour fermer le moule d'injection de résine sur le mandrin d'imprégnation. Lors de la fermeture du moule d'injection, des cales de compactage peuvent être utilisées afin de maintenir l'effort de compaction sur la préforme. Ces cales sont notamment utilisées pour compacter les brides des extrémités de la préforme qui sont verticales (ou radiales) et ont donc une direction de compaction différente du reste de la préforme qui a une direction de compaction axiale. Ces cales permettent également d'éviter qu'en mettant directement des secteurs à direction de fermeture radiale, ces mêmes secteurs ne viennent plier les brides ou les faire flamber ou cisailler.

Actuellement, les cales de compactage sont, en position fermée, uniquement en contact avec les secteurs angulaires du contre-moule et la préforme fibreuse, notamment au niveau des futures brides de fixation du carter. Etant donné que le positionnement axial des secteurs angulaires a une certaine variabilité et qu'une variabilité supplémentaire est ajoutée par la jonction entre la cale et les secteurs, la variabilité finale du positionnement de la cale est très importante. Cela influe directement sur l'épaisseur finale de la pièce à fabriquer dans cette zone. De plus, c'est une zone dans laquelle on cherche à avoir une bonne maîtrise des épaisseurs car les brides sont ensuite usinées. Cette maîtrise est également importante pour contrôler la quantité de carbone présente dans la pièce finale usinée, c'est-à-dire la quantité de résine injectée.

Il est donc souhaitable de disposer d'un moule d'injection, notamment d'une nouvelle cale de compactage permettant de réduire les interactions entre les secteurs angulaires et la cale afin de réduire la variabilité de l'épaisseur de la préforme au niveau des futures brides du carter et ainsi d'adapter la quantité de résine injectée dans le moule.

### Exposé de l'invention

L'invention concerne un moule destiné à être utilisé pour la fabrication d'un carter de soufflante de turbine à gaz en matériau composite selon la revendication 1 comprenant :
- un mandrin sur lequel est destinée à être enroulée une préforme fibreuse de carter de soufflante comprenant une paroi annulaire dont le profil de la surface extérieure correspond à celui de la surface interne du carter à fabriquer et deux flasques latéraux dont les profils correspondent à ceux de brides externes du carter à fabriquer ;
- une pluralité de secteurs angulaires de contre-moule assemblés de façon étanche sur le mandrin et destinés à fermer le moule et à compacter une préforme fibreuse enroulée sur le mandrin, et
- au moins une cale de compactage, la cale étant placée entre la préforme fibreuse enroulée sur le mandrin et le secteur angulaire de contre-moule associé,
caractérisé en ce que la cale de compactage est en appui sur l'un des flasques latéraux du mandrin et recouvre le sommet d'une des brides externes du carter à fabriquer.

Le moule selon l'invention permet ainsi d'améliorer le positionnement des cales de compactage. En étant en appui contre un des flasques latéraux, la position des cales est plus facilement répétable. En effet, en ayant les cales toujours placées au même endroit et en appui sur l'un des flasques, le positionnement relatif des pièces du moule sera plus précis et il sera plus facile de conserver un effort de compaction constant lors de la fabrication de plusieurs carters. Cela permet alors d'améliorer l'homogénéité de l'épaisseur des pièces fabriquées par ce moule.

En améliorant l'homogénéité de l'épaisseur des pièces fabriquées avec ce moule, on peut également simplifier, voire supprimer, l'étape de réusinage de la pièce après injection de résine dans le moule.

De plus, pour pouvoir placer les cales de compactage en appui contre l'un des flasques latéraux, on peut utiliser des cales de compactage plus grandes dans la direction radiale du moule que celles de l'art antérieur, ou réduire l'étendue de la bride externe dans la direction radiale et utiliser les cales de compactage actuelles.

L'avantage de réduire la taille de la bride externe est de pouvoir, en plus d'améliorer l'homogénéité de l'épaisseur des pièces, réduire la quantité de résine injectée dans le moule.

Ainsi, le moule selon l'invention est remarquable en ce qu'il permet de réduire la variabilité des épaisseurs de la pièce finale et de réduire la quantité de résine injectée dans le moule.

Un autre objet de l'invention est un procédé de fermeture d'un moule d'injection destiné à être utilisé pour la fabrication d'un carter de soufflante de turbine à gaz en matériau composite selon la revendication 2, le moule comprenant un mandrin sur lequel est destinée à être enroulée une préforme fibreuse de carter de soufflante, le mandrin comprenant une paroi annulaire dont le profil de la surface extérieure correspond à celui de la surface interne du carter à fabriquer et deux flasques latéraux dont les profils correspondent à ceux de brides externes du carter à fabriquer, le moule comprenant également une pluralité de secteurs angulaires de contre-moule destinés à fermer le moule et à compacter la préforme fibreuse enroulée sur le mandrin et au moins une cale de compactage, le procédé comprenant :
- l'assemblage étanche des secteurs angulaires de contre-moule sur le mandrin du moule, et
- le placement de la cale de compactage sur l'un des flasques latéraux, la cale de compactage étant positionnée contre une face longitudinale d'un secteur angulaire de contre-moule associé et étant destinée à recouvrir le sommet d'une bride externe du carter à fabriquer.

Un autre objet de l'invention est un procédé de fabrication d'un carter de soufflante de turbine à gaz en matériau composite selon la revendication 3 comprenant :
- l'enroulement d'une préforme fibreuse sur le mandrin d'un moule selon l'invention ;
- la fermeture du moule selon le procédé de fermeture de l'invention ;
- l'injection dans le moule d'une résine ; et
- le démoulage du carter de soufflante.

Encore un autre objet de l'invention selon la revendication 4 est une turbine à gaz comprenant un carter de soufflante fabriqué par un procédé de fabrication selon l'invention.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif.
[Fig. 1] La figure 1 représente, de manière schématique et partielle, un carter de soufflante de turbine à gaz.
[Fig. 2A] La figure 2A représente, de manière schématique et partielle, une coupe d'un moule selon l'art antérieur, lorsqu'il est fermé.
[Fig. 2B] La figure 2B représente une vue en perspective du moule de la figure 2A.
[Fig. 3] La figure 3 représente, de manière schématique et partielle, un moule selon l'invention lorsqu'il est fermé.

### Description des modes de réalisation

L'invention sera décrite ci-après dans le cadre de son application à la fabrication d'un carter de soufflante de moteur aéronautique à turbine à gaz.

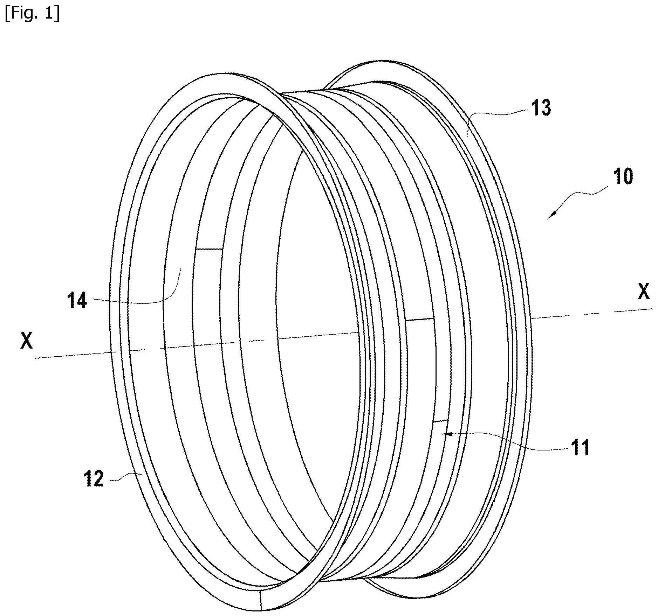

La figure 1 représente une vue en perspective d'un carter de soufflante 10 pouvant être fabriqué en utilisant un moule et un procédé selon l'invention. Un tel carter est centré sur un axe longitudinal X-X et comprend une paroi annulaire 11 délimitée à l'amont par une bride amont 12 et à l'aval par une bride aval 13 (l'amont et l'aval étant définis par rapport au sens d'écoulement du flux gazeux dans la turbine à gaz). La surface interne 14 de la paroi annulaire 11 est destinée à délimiter la veine d'entrée d'air dans la turbine à gaz.

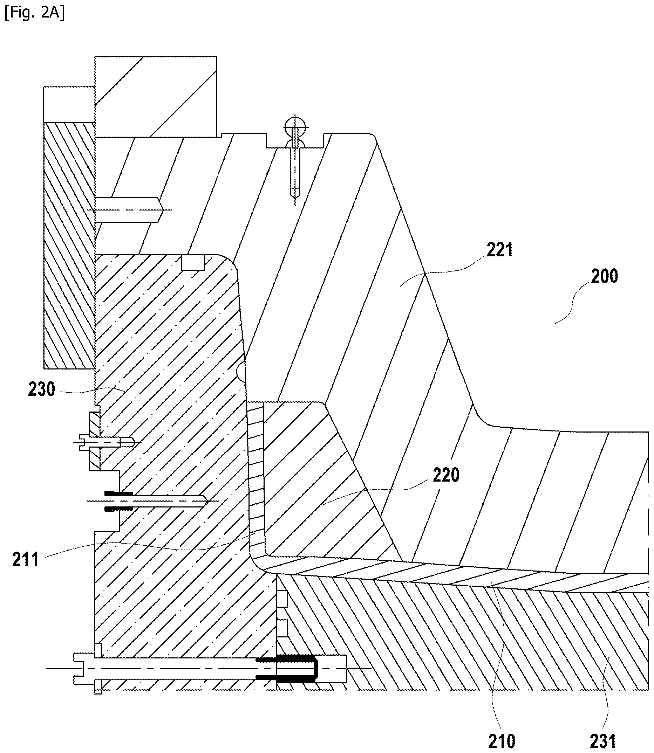

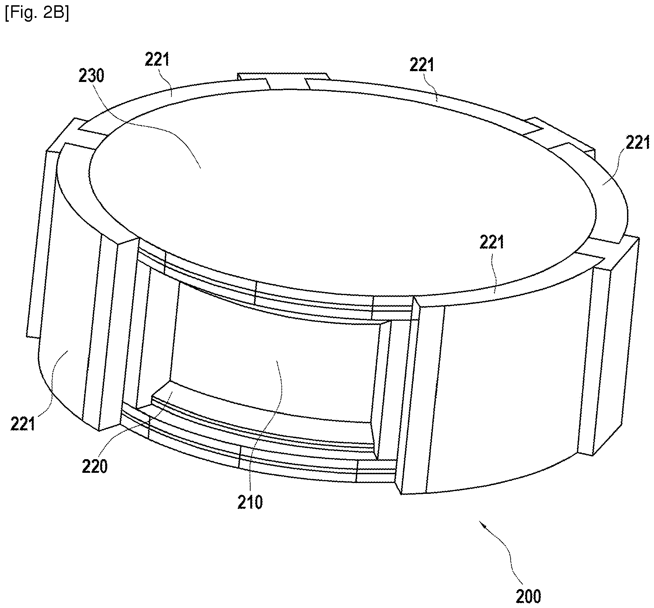

Les figures 2A et 2B représentent, de manière schématique et partielle, un moule 200 selon l'art antérieur, lorsqu'il est fermé. La figure 2A est une vue en coupe et la figure 2B une vue en perspective du moule 200.

Un tel moule 200 peut être utilisé pour l'imprégnation par un procédé du type RTM (« Resin Transfer Molding ») d'une préforme fibreuse 210 afin de fabriquer un carter de soufflante 10 tel que celui présenté en figure 1. La préforme fibreuse 210 peut être réalisée par tissage tridimensionnel de fibres, par exemple de carbone, verre, aramide ou céramique, et la matrice d'imprégnation peut être en polymère, par exemple époxide, bismaléimide ou polyimide.

Le moule 200 est monté de façon rotative sur un axe d'entraînement (non représenté) centré sur l'axe X-X, et comprend un mandrin 231. Le mandrin 231 comprend une paroi annulaire prenant la forme d'un fût sur lequel est destinée à être enroulée une préforme fibreuse 210, et deux flasques latéraux (un seul flasque 230 est représenté). Le mandrin 231 est maintenu sur son axe d'entraînement par l'intermédiaire de rayons non représentés.

Les flasques latéraux 230 forment un appui destiné à recevoir les parties rabattues 211 de la préforme 210 enroulée sur le mandrin 231, et qui sont destinées à former les brides amont 12 et aval 13 du carter de soufflante 10.

Le moule 200 comprend également un contre-moule composé d'une pluralité de secteurs angulaires 221 assemblés de façon étanche sur le mandrin 231, et deux cales de compactage 220. Sur la figure 2A, seul un secteur angulaire 221 avec sa cale de compactage 220 sont représentés.

Selon l'art antérieur, la cale de compactage 220 est placée entre la préforme fibreuse 210 enroulée sur le mandrin 231 et un secteur angulaire 221 de contre-moule. Le secteur angulaire 221 est en appui contre le flasque 230. La cale de compactage 220 a la même hauteur que la future bride 211 du carter, et n'est donc pas en appui contre le flasque 230.

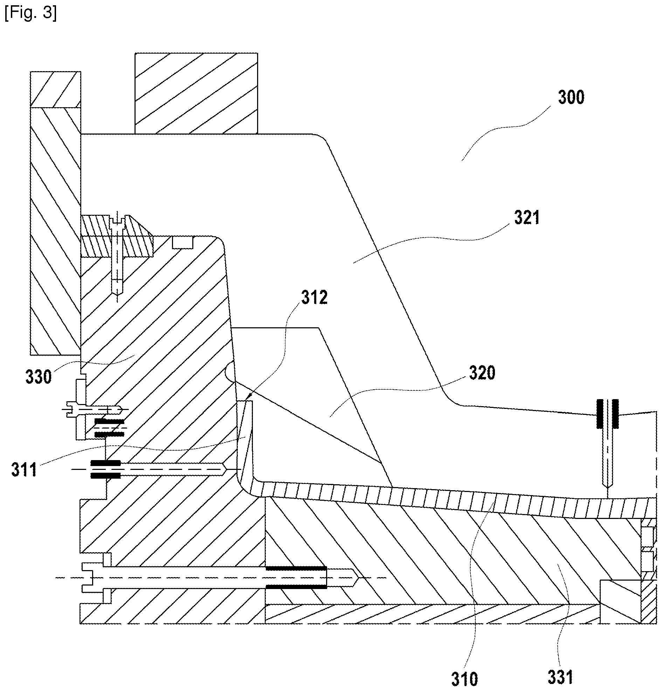

La figure 3 représente, de manière schématique et partielle, une vue en coupe d'un moule 300 selon l'invention, lorsqu'il est fermé.

Comme le moule 200 de l'art antérieur, le moule 300 selon l'invention peut être utilisé pour l'imprégnation par un procédé du type RTM (« Resin Transfer Molding ») d'une préforme fibreuse 310 afin de fabriquer un carter de soufflante 10 tel que celui présenté en figure 1.

Le moule 300 est monté de façon rotative sur un axe d'entraînement (non représenté) centré sur l'axe X-X, et comprend un mandrin 331. Le mandrin 331 comprend une paroi annulaire prenant la forme d'un fût sur lequel est destinée à être enroulée une préforme fibreuse 310, et deux flasques latéraux (un seul flasque 330 est représenté). Le mandrin 331 est maintenu sur son axe d'entraînement par l'intermédiaire de rayons non représentés.

Les flasques latéraux 330 forment un appui destiné à recevoir les parties rabattues 311 de la préforme 310 enroulée sur le mandrin 331, et qui sont destinées à former les brides amont 12 et aval 13 du carter de soufflante 10.

Le moule 300 comprend également un contre-moule composé d'une pluralité de secteurs angulaires 321 assemblés de façon étanche sur le mandrin 331, et au moins une cale de compactage 320.

Contrairement à l'art antérieur, la cale de compactage 320 est placée entre la préforme fibreuse 310 enroulée sur le mandrin 331 et un secteur angulaire 321 de contre-moule, et vient en appui contre le flasque latéral 330. Le secteur angulaire 321 est également en appui contre le flasque 330.

Ainsi, la cale de compactage 320 est plus grande que la future bride 311 du carter de manière à en recouvrir le sommet 312. Pour ce faire, il est possible soit d'utiliser des cales de compactage de la même dimension générale que les cales actuelles et de réduire la taille de la bride externe, soit de maintenir la taille de la bride externe et d'augmenter la taille de la cale de compactage.

La position relative de la cale de compactage 320 et du flasque 330 est donc plus facilement répétable et permet ainsi de limiter les variabilités d'épaisseur de la préforme 310 lors de son compactage. Ainsi l'étape de réusinage de la pièce après le compactage et l'injection de résine dans le moule 300 est simplifiée, voire supprimée.

De plus, afin que la cale de compactage 320 soit en appui sur le flasque latéral 330, on peut soit utiliser une cale plus grande que celles de l'art antérieur ou alors utiliser les cales de l'art antérieur et diminuer la taille des brides amont 12 et aval 13 du carter 10 à fabriquer. En diminuant ainsi la taille des brides, on peut également réduire la quantité de résine injectée dans le moule 300.

Si la préforme 310 est destinée à comprendre deux brides latérales, il est possible d'avoir deux cales de compactage par secteur angulaire, les cales étant destinées à recouvrir le sommet des deux brides.

Dans le cas où les cales de compactage sont laissées en place sur le moule suite au compactage pour fermer le moule et réaliser une injection, il est également possible d'avoir au moins deux cales de compactage par secteur angulaire, les cales étant destinées à recouvrir le sommet des brides. Par exemple, trois cales de compactage par secteur angulaire peuvent être utilisées.

Dans le même cas, il est également possible d'avoir une cale de compactage par secteur angulaire, la cale étant destinée à recouvrir le sommet d'une des brides.

Dans le même cas, il est également possible d'avoir plus de secteurs angulaires que de cales de compactage. Par exemple, le moule peut comprendre trois cales de compactage et six secteurs angulaires.

Il est également possible de n'avoir qu'une seule cale de compactage. Cela pourrait par exemple être mis en œuvre dans le cas où l'injection serait faite avec un autre moule, ou alors dans le cas où la préforme est destinée à ne comprendre qu'une seule bride latérale.

La fabrication d'un carter de soufflante 10 est maintenant décrite.

Une préforme fibreuse est d'abord enroulée sur le mandrin 331 d'un moule 300 selon l'invention. Des procédés ont déjà été proposés pour enrouler une préforme fibreuse réalisée par exemple par tissage tridimensionnel autour d'un mandrin 331 tel que celui de l'invention, et ne seront pas décrits plus en détail. On pourra, par exemple, se référer à la demande WO 2012/140355 qui propose une machine d'enroulement d'une texture fibreuse sur un mandrin d'imprégnation.

Une fois la préforme enroulée sur le mandrin, il faut fermer le moule pour compacter la préforme. Pour cela, les secteurs angulaires doivent être assemblés sur le mandrin de manière étanche et la cale doit être placée sur l'un des flasques latéraux de manière à recouvrir le sommet de la future bride du carter en cours de fabrication. La cale de compactage est également positionnée contre une face longitudinale d'un secteur angulaire. Ainsi la cale est en appui sur l'un des flasques latéraux, et elle est simplement poussée sur la préforme pour obtenir une variabilité de positionnement plus faible, c'est-à-dire une précision plus importante. Avec plusieurs cales, l'étape de placement de la cale est donc répétée pour pouvoir positionner les cales contre une face longitudinale d'un secteur angulaire et placer chaque cale sur l'un des flasques latéraux de manière à ce que le sommet de la future bride du carter en cours de fabrication soit recouvert par les cales.

Les cales permettent le compactage dans une direction sensiblement perpendiculaire à la préforme et donc permettent d'éviter les plis et les flambages.

Une résine polymérisable est ensuite injectée dans le moule par un différentiel de pression (par un procédé de type RTM), et cette dernière est polymérisée (par chauffage ou refroidissement par exemple, selon la nature de la résine utilisée). Le carter de soufflante ainsi fabriqué peut alors être démoulé.

## Revendications

1. Moule (300) destiné à être utilisé pour la fabrication d'un carter de soufflante (10) de turbine à gaz en matériau composite comprenant :
- un mandrin (331) sur lequel est destinée à être enroulée une préforme fibreuse (310) de carter de soufflante comprenant une paroi annulaire dont le profil de la surface extérieure correspond à celui de la surface interne (14) du carter à fabriquer et deux flasques latéraux (330) dont les profils correspondent à ceux de brides externes (12, 13) du carter à fabriquer ;
- une pluralité de secteurs angulaires (321) de contre-moule destinés à être assemblés de façon étanche sur le mandrin et destinés à fermer le moule et à compacter une préforme fibreuse enroulée sur le mandrin, et
- au moins une cale de compactage (320), la cale étant destinée à être placée entre la préforme fibreuse enroulée sur le mandrin et le secteur angulaire (321) de contre-moule associé,
**caractérisé en ce que** la cale de compactage est en appui sur l'un des flasques latéraux (330) du mandrin et est destinée à recouvrir le sommet (312) d'une des brides externes (311) du carter à fabriquer.

2. Procédé de fermeture d'un moule d'injection destiné à être utilisé pour la fabrication d'un carter de soufflante de turbine à gaz en matériau composite, le moule comprenant un mandrin sur lequel est destiné à être enroulée une préforme fibreuse de carter de soufflante, le mandrin comprenant une paroi annulaire dont le profil de la surface extérieure correspond à celui de la surface interne du carter à fabriquer et deux flasques latéraux dont les profils correspondent à ceux de brides externes du carter à fabriquer, le moule comprenant également une pluralité de secteurs angulaires de contre-moule destinés à fermer le moule et à compacter la préforme fibreuse enroulée sur le mandrin et au moins une cale de compactage, le procédé comprenant :
- l'assemblage étanche des secteurs de contre-moule sur le mandrin du moule ; et
- le placement de la cale de compactage sur l'un des flasques latéraux, la cale de compactage étant positionnée contre une face longitudinale du secteur angulaire de contre-moule associé et étant destinée à recouvrir le sommet d'une bride externe du carter à fabriquer.

3. Procédé de fabrication d'un carter de soufflante de turbine à gaz en matériau composite comprenant :
- l'enroulement d'une préforme fibreuse sur le mandrin d'un moule selon la revendication 1 ;
- la fermeture du moule selon le procédé de la revendication 2 ;
- l'injection dans le moule d'une résine ; et
- le démoulage du carter de soufflante.

4. Turbine à gaz comprenant un carter de soufflante (10) fabriqué par un procédé selon la revendication 3.

## Patentansprüche

1. Form (300), die bestimmt ist, zur Herstellung eines Gasturbinen-Gebläsegehäuses (10) aus Verbundmaterial verwendet zu werden, umfassend:
- einen Kern (331), auf den bestimmt ist, ein Faservorformling (310) des Gebläsegehäuses gewickelt zu werden, der eine ringförmige Wand, deren Profil der Außenfläche dem Profil der Innenfläche (14) des herzustellenden Gehäuses entspricht, und zwei Seitenflansche (330) umfasst, deren Profile denen von Außenflanschen (12, 13) des herzustellenden Gehäuses entsprechen;
- eine Vielzahl von Gegenform-Winkelsektoren (321), die dazu bestimmt sind, dicht am Kern angebracht zu werden, und die dazu bestimmt sind, die Form zu schließen und einen auf den Kern gewickelten Faservorformling zu verdichten, und
- mindestens einen Verdichtungskeil (320), wobei der Keil dazu bestimmt ist, zwischen dem auf den Kern gewickelten Faservorformling und dem zugehörigen Gegenform-Winkelsektor (321) platziert zu werden,
**dadurch gekennzeichnet, dass** der Verdichtungskeil an einem der Seitenflansche (330) des Kerns anliegt und dazu bestimmt ist, die Spitze (312) eines der äußeren Flansche (311) des herzustellenden Gehäuses zu bedecken.

2. Verfahren zum Schließen einer Spritzgussform, die zur Verwendung bei der Herstellung eines Gehäuses für ein Gasturbinengebläse aus Verbundmaterial bestimmt ist, wobei die Form einen Kern umfasst, auf den bestimmt ist, ein Faservorformling des Gebläsegehäuses gewickelt zu werden, wobei der Kern eine ringförmige Wand, deren Profil der Außenfläche dem Profil der Innenfläche des herzustellenden Gehäuses entspricht, und zwei Seitenflansche umfasst, deren Profile denen von Außenflanschen des herzustellenden Gehäuses entsprechen, wobei die Form ebenfalls eine Vielzahl von Gegenform-Winkelsektoren zum Schließen der Form und zum Verdichten des auf den Kern gewickelten Faservorformlings und mindestens einen Verdichtungskeil umfasst, wobei das Verfahren umfasst:
- dichtes Verbinden der Gegenform-Sektoren auf dem Kern der Form; und
- Platzieren des Verdichtungskeils auf einem der Seitenflansche, wobei der Verdichtungskeil gegen eine Längsseite des zugehörigen Gegenform-Winkelsektors positioniert wird und dazu bestimmt ist, die Spitze eines Außenflansches des herzustellenden Gehäuses zu bedecken.

3. Verfahren zur Herstellung eines Gehäuses für ein Gasturbinengebläse aus Verbundmaterial, umfassend:
- Wickeln eines Faservorformlings auf den Kern einer Form nach Anspruch 1;
- Schließen der Form nach dem Verfahren von Anspruch 2;
- Einspritzen eines Harzes in die Form; und
- Entformen des Gebläsegehäuses.

4. Gasturbine, umfassend ein Gebläsegehäuse (10), das nach einem Verfahren nach Anspruch 3 hergestellt ist.

## Claims

1. A mold (300) intended to be used for the manufacture of a gas turbine fan casing (10) made of composite material comprising:
- a mandrel (331) on which a fibrous preform (310) of a fan casing is intended to be wound said preform comprising an annular wall the profile of the outer surface of which corresponds to that of the inner surface (14) of the casing to be manufactured and two side flasks (330) the profiles of which correspond to those of outer flanges (12, 13) of the casing to be manufactured;
- a plurality of angular counter-mold sectors (321) intended to be assembled in a sealed manner on the mandrel and intended to close the mold and to compact a fibrous preform wound on the mandrel, and
- at least one compacting wedge (320), the wedge being intended to be placed between the fibrous preform wound on the mandrel and the associated angular counter-mold sector (321),
**characterized in that** the compacting wedge bears on one of the side flasks (330) of the mandrel and is intended to cover the top (312) of one of the outer flanges (311) of the casing to be manufactured.

2. The method for closing an injection mold intended to be used for the manufacture of a gas turbine fan casing made of composite material, the mold comprising a mandrel on which a fibrous preform of a fan casing is intended to be wound, the mandrel comprising an annular wall the profile of the outer surface of which corresponds to that of the inner surface of the casing to be manufactured and two side flasks the profiles of which correspond to those of outer flanges of the casing to be manufactured, the mold also comprising a plurality of angular counter-mold sectors intended to close the mold and to compact the fibrous preform wound on the mandrel and at least one compacting wedge, the method comprising:
- the tight assembly of the counter-mold sectors on the mold mandrel; and
- the placement of the compacting wedge on one of the side flasks, the compacting wedge being positioned against a longitudinal face of the associated angular counter-mold sector and being intended to cover the top of an outer flange of the casing to be manufactured.

3. The method for manufacturing a gas turbine fan casing made of composite material comprising:
- winding a fibrous preform on the mandrel of a mold according to claim 1;
- closing the mold according to the method of claim 2;
- injecting a resin into the mold; and
- unmolding the fan casing.

4. A gas turbine comprising a fan casing (10) manufactured by a method according to claim 3.
